(19) **Europäisches Patentamt**

**European Patent Office**

**Office européen des brevets**

(11) **EP 1 063 794 A2**

(12) **EUROPEAN PATENT APPLICATION**

(43) Date of publication:
27.12.2000 Bulletin 2000/52

(51) Int. Cl.7: **H04B 10/155**

(21) Application number: **00113367.7**

(22) Date of filing: **23.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.06.1999 JP 17846799**

(71) Applicant: **NEC CORPORATION**
**Tokyo (JP)**

(72) Inventor: **Iwafuji, Takami**
**Minato-ku, Tokyo (JP)**

(74) Representative:
**Glawe, Delfs, Moll & Partner**
**Patentanwälte**
**Postfach 26 01 62**
**80058 München (DE)**

(54) **Optical transmitter and wavelength multiplexing optical transmission apparatus using the same**

(57) In an optical transmitter, an oscillation wavelength of a semiconductor laser diode is controlled so as to stabilize the oscillation wavelength, while neither forward project light, nor a beam splitter is employed. The optical transmitter is arranged by employing: an optical waveguide path into which forward projection light of the semiconductor laser diode is entered; a wavelength filter containing an oscillation wavelength of the semiconductor laser diode in a wavelength band where a transmission wavelength band is transferred to a reflection wavelength band and vice versa, for causing a portion of backward projection light of the semiconductor laser diode to pass therethrough to output transmission light, and for reflecting the remaining light of the backward projection light to output reflection light; a first light receiving device for detecting a light level of the transmission light to output a transmission light level; a second light receiving device for detecting a light level of the reflection light to output a reflection light level; and a wavelength control circuit for controlling an oscillation wavelength of the semiconductor laser diode based upon both the transmission light level and the reflection light level.

Fig.2

EP 1 063 794 A2

**Description**

BACKGROUND OF THE INVENTION

1. Field of the Invention

The present invention generally relates to an optical transmitter using a semiconductor laser diode as a light source. More specifically, the present invention is directed to both an optical transmitter having a function capable of monitoring an oscillation wavelength of a semiconductor laser diode so as to control the monitored oscillation wavelength to obtain a predetermined wavelength, and a wavelength multiplexing optical transmission apparatus.

2. Description of the Related Art

Since the Internet is rapidly popularized, there have been increasing demands for extending transmission capacities. As a consequence, not only optical transmissions using a wavelength of a single semiconductor laser diode are utilized, but also wavelength multiplexing optical communications are gradually introduced in which a plurality of semiconductor laser diodes are employed so that a plurality of wavelengths are multiplexed in high density.

The following is important in a wavelength multiplexing optical transmission. That is, while an oscillation wavelength of a semiconductor laser diode is monitored, the oscillation wavelength is controlled so as to be stabilized. As a means for stabilizing an oscillation wavelength of a semiconductor laser diode, for instance, one method is known by which a temperature thereof is kept constant so as to maintain the oscillation wavelength of the semiconductor laser diode at a constant wavelength. However, in such a case that a wavelength variation occurs due to the aging effect of the semiconductor laser diode, this conventional method can hardly suppress this wavelength variation. In addition, in a wavelength multiplexing optical communication with high density, while an interval among oscillation wavelengths of semiconductor laser diodes is narrowed, the wavelengths must be set with high precision. However, the wavelength control operation by the conventional method cannot satisfactorily set the wavelengths with high precision.

Under such a circumstance, generally speaking, as a control method capable of controlling an oscillation wavelength of a semiconductor laser diode in order not to produce a change in this oscillation wavelength, backward projection light of the semiconductor laser diode is detected by a photodetector, and a control operation is carried out based upon the detected backward projection light in such a way that a laser light output from the semiconductor laser diode can be made constant.

On the other hand, as an arrangement capable of suppressing such a wavelength variation, a temperature of a semiconductor laser diode is controlled to be kept constant. As a typical temperature control arrangement, for instance, Japanese Patent Application Laid-open No. Hei 9-219554 discloses such a control arrangement that two optical filters whose transmission characteristics own the gradients opposite to each other are employed so as to adjust the temperature of the semiconductor laser diode, thereby controlling the oscillation wavelength of this semiconductor laser diode.

In this known control arrangement of the publication, the backward projection light of the semiconductor laser diode is subdivided into two beams of projection light, transmission light and reflection light, by the beam splitter arranged at the post stage of this semiconductor laser diode. Both the transmission light and the reflection light are filtered by the wavelength filters having the transmission characteristics opposite to each other, and then the filtered transmission light and the filtered reflection light are detected by the light receiving devices. In response to the signals related to the light levels detected by the respective light receiving devices, both the light output (optical output) of the semiconductor laser diode and the oscillation wavelength thereof are controlled.

In this control arrangement, the oscillation wavelength is controlled by changing the temperature of the semiconductor laser diode in such a manner that the shift in the oscillation wavelength is corrected based upon the output difference between the light levels detected by the respective light receiving devices. With employment of the above-explained control arrangement, the oscillation wavelength of the semiconductor laser diode may, if not satisfiable, be stabilized irrespective of the aging effect of this semiconductor laser diode.

However, there is another problem that since the beam splitter is employed, the light is newly polarized. Also, the beam splitting ratio of the beam splitter itself is readily varied due to the temperature change, so that it is practically difficult to obtain such a beam splitter element capable of splitting a light beam, while keeping an ideal predetermined ratio and a stable condition. Furthermore, it is practically difficult to realize wavelength filters whose transmission characteristics owns gradients opposite to each other.

Japanese Patent Application Laid-open No. Hei 10-209546 discloses the control arrangement in which the forward projection light of the semiconductor laser diode is separated by the photocoupler without using such beam splitter, and the transmission light and the reflection light are detected by the photodetectors, respectively, by way of the interference filters. Then, the oscillation wavelength of the semiconductor laser diode is controlled based upon the difference in the light level detection amounts.

Since the beam splitter is not employed, the problem caused by the employment of this beam splitter can be avoided. However, generally speaking, when a wavelength filter is inclined at an angle larger than, or equal to 5 degrees, a transmission level of this filter is varied. As a result, a light receiving device for receiving reflection light is required to be located at a position apart from this wavelength filter. As a consequence, when an optical module is arranged by employing the above-described arrangement, there is a drawback that a dimension of the resultant arrangement becomes large. Moreover, when such optical transmitter is applied to a wavelength multiplexing optical communication, since forward projection light must be splitted by a photocoupler, a beam splitting loss may occur. Also, when a total number of multiplexing wavelengths is increased, a larger space must be required, causing another problem of making the resulting optical transmission apparatus bulky.

SUMMARY OF THE INVENTION

An object of the present invention is to provide an optical transmitter and a wavelength multiplexing optical transmission apparatus using this optical transmitter, capable of controlling an oscillation wavelength of a semiconductor laser diode so as to stabilize the oscillation wavelength, while neither forward projection light, nor a beam splitter is employed.

To achieve the object, an optical transmitter, according to the present invention, is featured by comprising: a semiconductor laser diode; an optical waveguide path into which forward projection light of this semiconductor laser diode is entered; a wavelength filter; and two light receiving devices, i.e, first and second light receiving devices. The wavelength filter owns a function of containing an oscillation wavelength of the semiconductor laser diode in a wavelength band where a transmission wavelength band is transferred to a reflection wavelength band and vice versa, of causing a portion of backward projection light of the semiconductor laser diode to pass therethrough to output transmission light, and also of reflecting the remaining light of the backward projection light to output reflection light. The first light receiving device detects a light level of the transmission light to output a transmission light level, and the second light receiving device detects a light level of the reflection light to output a reflection light level.

The optical transmitter, according to the present invention, further comprises a wavelength control circuit, and is characterized in that this wavelength control circuit controls an oscillation wavelength of the semiconductor laser diode based upon both the transmission light level and the reflection light level. In such a case that the oscillation wavelength of the semiconductor laser diode is controlled to a predetermined wavelength "λL" and is desired to be kept thereto, for example, a wavelength filter having the following wavelength characteristic is selected. That is, when projection light which passes through the wavelength filter and projection light which is reflected by the wavelength filter are outputted at the same ratios, the oscillation wavelength becomes "λL". In other words, the wavelength filter owns a wavelength characteristic containing an oscillation wavelength of the semiconductor laser diode in a wavelength band where a transmission wavelength band is transferred to a reflection wavelength band and vice versa. When the oscillation wavelength is shifted, the ratio of the transmission light of the wavelength filter to the reflection light thereof is changed.

With employment of such wavelength filter, if the oscillation wavelength of the semiconductor laser diode is shifted from the target wavelength of "λ0", then the light level of the transmission light (will be referred to as a "transmission light level" hereinafter) is increased in accordance with the shifted wavelength component. At the same time, the light level of the reflection light (will be referred to as a "reflection light level" hereinafter) is decreased. As a consequence, the shift in the wavelengths can be predicted based on the relationship between the transmission light level and the reflection light level, and then the wavelength can be controlled in such a manner that the oscillation wavelength is shifted along the reverse direction in connection with this wavelength variation amount.

The wavelength characteristic of the wavelength filter may be preferably set as follows: That is, when the oscillation wavelength of the semiconductor laser diode is equal to a desired wavelength, the light amount of the laser light reflected by the wavelength filter is substantially equal to the light amount of the laser light passing through this wavelength filter. This is because the sensitivity with respect to the wavelength variation is increased. The present invention is not limited to this method, but may be applied to other methods for controlling the oscillation wavelength based upon the relationship between the transmission light level and the reflection light level. Specifically, there are a wavelength control method in which a ratio of both the transmission/reflection light levels is calculated, and this calculated ratio is controlled to be equal to a predetermined reference ratio, and a wavelength control method in which a difference between the transmission/reflection light levels is calculated, and this calculated difference is controlled to be equal to a predetermined reference value. As a concrete wavelength control method, for example, a semiconductor laser diode is arranged on a temperature control element such as a Peltier effect element, and a peripheral temperature of this semiconductor laser diode is changed.

In the optical transmitter of the present invention, one of these projection light is not monitored, for example, the variation in the absolute value of the light level of the transmission light from the wavelength filter is not monitored. Instead, the ratio of the transmission light to the reflection light is monitored. As a result, assuming now that a change is produced in light power outputted from the semiconductor laser diode itself, a light level of a summation of transmission light and reflection light is also calculated, and a wavelength control operation is carried out in such a manner that this summation light level becomes constant. As a result, the output level of the semiconductor laser diode may also be stabilized at the same time. The output level of the semiconductor laser diode may be controlled by controlling, for instance, an injection current into an element. Furthermore, in connection with the above-described wavelength control operation, the following wavelength control method may be carried out. That is, a circuit controls the first temperature control element in such a manner that a difference between the transmission light level and the reflection light level is divided by the summation light level and then the calculated difference is ruled to obtain a ruled level difference, and the ruled level difference is used to control the wavelength of the semiconductor laser diode.

In order to stabilize the characteristic of the wavelength filter, the optical transmitter, according to the present invention, may be arranged by comprising: a second temperature control element for controlling a peripheral temperature of the wavelength filter; and a second temperature control circuit for controlling the second temperature control element in such a manner that the peripheral temperature of the wavelength filter becomes constant.

The above-explained optical waveguide path may be made of such an optical waveguide path formed on a board, or an optical fiber. Alternatively, a lens may be arranged between the semiconductor laser diode and the wavelength filter, which converts the backward projection light into a collimated beam, so that a coupling efficiency of this backward projection light to the light receiving device may be increased.

While a plurality of the above-explained optical transmitters according to the present invention are provided in an optical transmission station, the respective wavelengths of signal light are approximated to each other and are controlled with high precision, so that a wavelength multiplexing optical transmission apparatus can be formed. In other words, the wavelength multiplexing optical transmission apparatus, according to the present invention, is equipped with an optical transmission station; an optical reception station; and an optical transmission path for connecting the optical transmission station to the optical reception station, which optically transmits a plurality of signal light having wavelengths different from each other between the optical transmission station and the optical reception station. The above-explained optical transmission station corresponds to the optical transmitter of the present invention. The optical transmission station includes a plurality of optical transmitters of the present invention in which wavelengths of signal light outputted from the optical waveguide paths (optical fibers) are different from each other, and a wavelength division multiplexer for wavelength-multiplexing the signal light, and the optical reception station includes an optical receiver for receiving the respective signal light.

## BRIEF DESCRIPTION OF THE DRAWINGS

The above and other objects, features and advantages of the present invention will become more apparent from the following detailed description when taken in conjunction with the accompanying drawings wherein:

   Fig. 1 illustratively shows one structural example of the conventional optical transmitter;
   Fig. 2 illustratively represents an arrangement of an optical transmitter according to a first embodiment of the present invention;
   Figs. 3(A) to 3(C) graphically indicate a relationship among an oscillation wavelength of a semiconductor laser diode, a light receiving amount, and an output of a calculating device; Fig. 3(A) graphically shows a wavelength characteristic of a wavelength filter; Fig.3(B) graphically indicates a relationship between a wavelength and a light receiving amount (optical level) detected by each of light receiving device; and Fig. 3(C) represents a relationship between a wavelength and an output of a calculating device;
   Fig. 4 schematically shows an arrangement of an optical transmitter according to a second embodiment of the present invention;
   Fig. 5 schematically represents an arrangement of a wavelength multiplexing optical transmission apparatus with employment of the optical transmitter, according to the present invention; and
   Fig. 6 schematically indicates a relationship between a wavelength of a wavelength filter and a polarized light dependent characteristic of an incident light angle.

## DETAILED DESCRIPTION OF THE PREFERRED EMBODIMENTS OVERVIEW

Before describing an optical transmitter of the present invention, a conventional optical amplifying apparatus will now be explained so as to readily understand the inventive idea of the present invention.

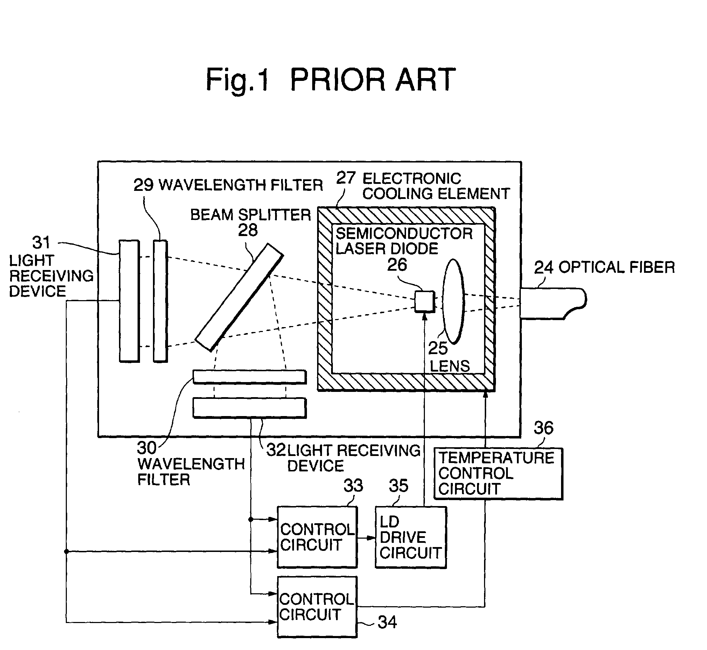

Fig. 1 illustratively shows one structural example of the conventional optical transmitter. Fig. 1 is a diagram for indicating the arrangement of the conventional wavelength control apparatus for the semiconductor laser diode, disclosed in the above-explained publication. This wavelength control apparatus is arranged by that the backward projection light of the semiconductor laser diode 26 is split into two beams of the transmission light and the reflection light by the beam splitter 28 provided at the backward position of this semiconductor laser diode 26, and both the transmission light and the reflection light are filtered by the wavelength filters 29 and 30 whose transmission characteristics are opposite to each other, and then the filtered transmission light and the filtered reflection light are detected by the light receiving devices 31 and 32.

The signals which are detected by the respective light receiving devices 31 and 32 and related to the light levels are processed by the control circuits 33 and 34. Both the light output and the oscillation wavelength of the semiconductor laser diode 26 by the LD drive circuit 35 and the temperature control circuit 37 are controlled based on the processed signals. In this conventional wavelength control apparatus, the oscillation wavelength of the semiconductor laser diode is controlled by changing the temperature of this semiconductor laser diode in order that the shift of the oscillation wavelength is corrected based upon the power difference of the light levels detected by the respective light receiving devices 31 and 32. With employment of the above-described arrangement, the oscillation wavelength of the semiconductor laser diode may be stabilized irrespective of the aging effect of this oscillation wavelength.

However, there is a problem that since the beam splitter is employed, the laser light is newly polarized. Since the beam splitting ratio of this beam splitter itself is readily varied due to the temperature change, it is practically difficult to obtain such an ideal beam splitter optical element capable of splitting an incident light beam under stable condition at a predetermined light splitting ratio. Moreover, it is practically difficult to realize such a wavelength filter having a transmission characteristic with an inverse gradient.

FIRST OPTICAL TRANSMITTER/WAVELENGTH CONTROL METHOD

Referring now to drawings, an optical transmitter and a wavelength control method, according to the present invention, will be described in detail.

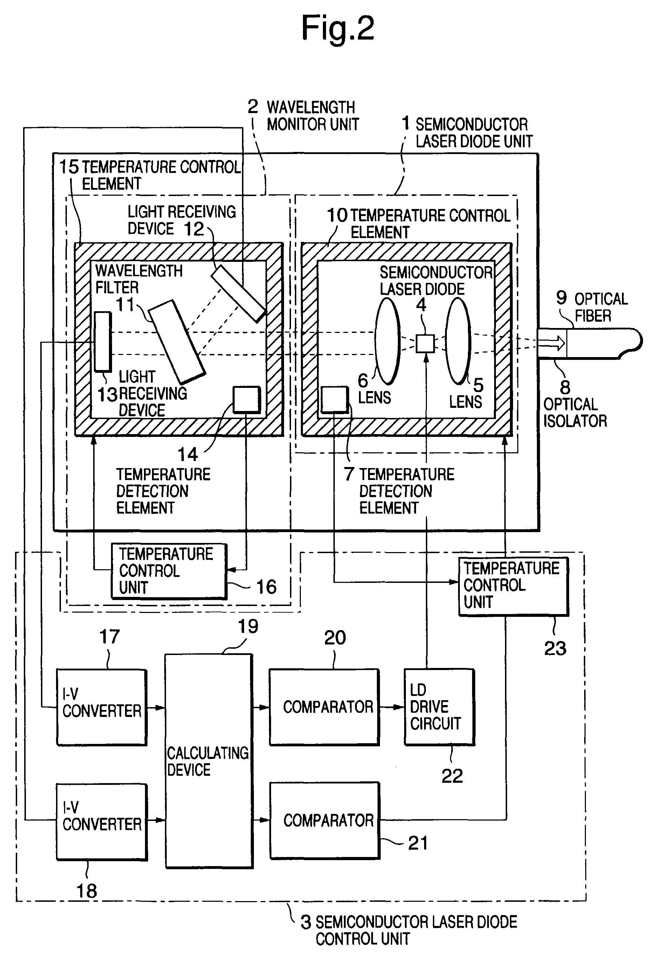

Fig. 2 is a schematic diagram for showing an arrangement of an optical transmitter according to a first embodiment mode of the present invention. As shown in Fig. 2, roughly speaking, the optical transmitter of this first embodiment mode is mainly arranged by a semiconductor laser diode unit 1, a wavelength monitor unit 2, and a semiconductor laser diode control unit 3. The semiconductor laser diode unit 1 is provided with a semiconductor laser diode 4, a lens 5 used to couple a light output of the semiconductor laser diode 4 to an optical fiber 9, a lens 6 used to condense backward light, a temperature control element 10 for controlling a temperature of the semiconductor laser diode 4, and also a temperature detecting element 7.

The wavelength monitor unit 2 is provided with a wavelength filter 11 for subdividing by 2 the backward projection light from the semiconductor laser diode 4 to thereby output transmission light and reflection light; and two light receiving devices 12 and 13, which receive the transmission light and the reflection light, respectively, so as to detect a light amount of received light (light level). It should be understood that in this first embodiment, since the characteristics of the wavelength filter 11 itself are made stabilized, a temperature detecting element 14, a temperature control element 15, and also a temperature control circuit 16 are employed in order that the peripheral temperature of the wavelength filter 11 can be adjusted.

The semiconductor laser diode control unit 3 is arranged by I-V converters 17/18 for I-V-converting a light detection current; a calculating device 19 for calculating the I-V-converted light detection current; two comparators 20/21 for comparing calculation amounts with each other; an LD drive circuit 22 for controlling an injection current injected into an LD (laser diode) based upon the compared amount; and a temperature control circuit 23 for controlling the temperature control element 10 which controls the temperature of the semiconductor laser diode 4. The above-described calculating device 19 is equipped with a summation light level calculating circuit, a calculating circuit, and the like. This summation light level calculating circuit calculates a summation light level of both a transmission light level and a reflection light level (will be discussed later). The calculating circuit calculates a ratio of a transmission light level to a reflection light level, or a difference between the transmission light level and the reflection light level.

In the semiconductor laser diode 4, both forward projection light and backward projection light are projected from both edge surfaces thereof. The forward projection light is converted into collimated light by the lens 5, and then this collimated light is coupled to the optical fiber 9 by an optical isolator 8. The backward projection light is converted into collimated light by the lens 6, and then the collimated light is entered into the wavelength filter 11. It should also be noted that as the lens 6 used to condense the backward light, an aspherical lens is employed as a best lens means. Alternatively, a spherical lens and a cylindrical lens may be employed. Also, a direct coupling structure without using such a lens may be employed. In this first embodiment mode, the forward projection light of the semiconductor laser diode 4 is entered into the optical fiber 9, but may be entered into an optical waveguide path formed on a board (not shown in detail). Furthermore, in this first embodiment mode, the optical isolator 8 is arranged between the lens 5 and the optical fiber 9 in order to avoid such a condition that the light returned from the optical fiber 9 is recombined with the semiconductor laser diode 4.

BASIC CONTROL IDEA OF LIGHT OUTPUT LEVEL/OSCILLATION WAVELENGTH

Next, a description will now be made of a basic control idea about controlling of a light output level and an oscillation wavelength in the optical transmitter of the present invention.

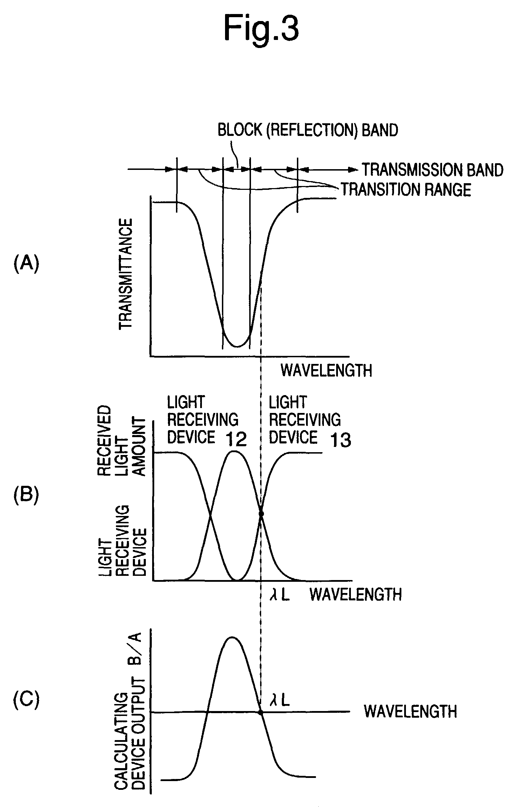

In the above-described arrangement, the backward projection light of the semiconductor laser diode 4 is subdivided by 2 into the transmission light and the reflection light by using the wavelength filter 11 located at the backward position of the semiconductor laser diode 4. In this case, the wavelength filter 11 owns such a filtering characteristic that a central wavelength of the original oscillation wavelength of the semiconductor laser diode 4 is located within such a wavelength range that a transmission wavelength band is transferred to a reflection wavelength band, or conversely the reflection wavelength band is transferred to the transmission wavelength band. For instance, since the following band-pass filter is employed, the function and the effect of the present invention can be achieved. That is, this band-pass filter may have such a wavelength characteristic that when the central wavelength of the oscillation wavelength of the semiconductor laser diode 4 is equal to 1,550 nm, this band-pass filter owns a reflection (blocking) band of a wavewidth equal to a wavelength range and shorter than 1,550 nm; incident light is perpetrated in a wavelength range other than this short wavelength range; this band-pass filter owns a range where a reflection band is transferred to a transmission band in the vicinity of 1,550 nm; and this band-pass filter has such a wavelength characteristic that transmittance is nearly equal to 50 % in the wavelength of 1,550 nm. Such a wavelength characteristic of the wavelength filter is represented in Fig. 3(A).

The above-described wavelength filter owns the wavelength characteristic in such a manner that the oscillation wavelength is contained in the transition range from the reflection band to the transmission band. Alternatively, this wavelength filter may have a wavelength characteristic in such a manner that the oscillation wavelength is conversely contained in the transition range from the transmission band to the reflection band. Furthermore, if a device owns the above-explained filtering characteristics, then not only the band-pass filter, but also a short-wave-pass filter as well as a long-wave-pass filter may be employed. This filtering characteristic implies that the central wavelength of the original oscillation wavelength of the semiconductor laser diode 4 is located within such a wavelength range that the transmission wavelength band is transferred to the reflection wavelength band, or the reflection wavelength band is transferred to the transmission wavelength band.

Returning back to Fig. 2, both the transmission light and the reflection light subdivided by the wavelength filter 11 are received by the two light receiving devices 12 and 13, respectively to be converted into current signals, so that both a transmission light level and a reflection light are detected. These current signals are further converted into voltage by the I-V converters 17 and 18. These converted voltage signals are used in order to control the light output level of the forward projection light and the wavelength thereof. First of all, a summation of the transmission light level and the reflection light level is calculated by the summation light level calculating circuit provided in the calculating device 19. The calculated result, namely a summation light level is compared with a reference voltage by a comparator 20, so that an injection amount of an injection current into the semiconductor laser diode 4 is controlled by the LD drive circuit 22 in such a manner that an error signal with respect to the reference voltage becomes zero. As a result, the semiconductor laser diode 4 can be controlled by the LD drive circuit 22 in such a way that the light level of the projection light from the semiconductor laser diode 4 can become constant.

On the other hand, a ratio of a transmission light level to a reflection light level is calculated by such a circuit capable of calculating a ratio of transmission light to reflection light, which is contained in the calculating device 19. Then, this calculated radio is compared with a predetermined reference ratio by the comparator 21. The wavelength of the laser light emitted from the semiconductor laser diode 4 is controlled by controlling the temperature of the semiconductor laser diode. The temperature of the semiconductor laser diode is controlled by way of the temperature control circuit 23 in such a manner that the calculated ratio can become a predetermined relationship. The above-explain wavelength control operation is carried out based upon the ratio of the transmission light level to the reflection light level as the control parameter. Alternatively, this wavelength control operation may be carried out based upon a simply obtained difference value. Furthermore, the wavelength of the semiconductor laser diode 4 may be controlled based on such a data that the above-calculated difference is divided by the previously calculated summation light level to obtain such a ruled data. When the light output level of the semiconductor laser diode 4 is constant, any of the above-explained control arrangements may be employed. When this light output level is changed, if the wavelength of the semiconductor laser diode 4 is controlled based on the above ruled data, a more proper wavelength control may be carried out.

DETAILED WAVELENGTH CONTROL OPERATION

Subsequently, the contents of the wavelength control operation will now be explained more in detail. In this case, the following wavelength control method is explained. That is, both a summation and a subtraction as to a transmission light level and a reflection light level are calculated. The difference is divided by the summation light level and then is ruled. Then, the wavelength is controlled based upon this ruled value. For example, this wavelength control operation is carried out in such an assumption that while using the band-pass filter having the wavelength characteristic as indicated in Fig. 3 (A), the dividing ratios by the wavelength filter in desirable oscillation wavelengths are equal to each other. Fig. 3(B) represents received light amount (light level) characteristics in the light receiving devices 12 and 13 in such a case that this wavelength filter is employed.

When received light amounts of the light receiving devices 12 and 13 are assumed as "P1" and "P2", respectively, these P1 and P2 may be expressed as follows:

$$P1 = F \cdot P \cdot S, \text{ and}$$

$$P2 = (1 - F) \cdot P \cdot S,$$

where symbol "F" shows a reflectivity of the wavelength filter, symbol "P" represents a reflection amount at a wavelength "$\lambda$", and symbol "S" indicates a sensitivity of the light receiving device.

A summation component "A" and a difference component "B" of two received light amounts are expressed as follows:

$$A = P1 + P2 = P \cdot S, \text{ and}$$

$$B = P1 - P2 = (2F - 1) \cdot P \cdot S.$$

Based upon the above-explained formulae, the ratio of A to B is given as follows:

$$B/A = 2F - 1.$$

While the above-explained process operation is executed in the calculating device 19, the injection current into the semiconductor laser diode 4 is controlled by the LD drive circuit 22 in such a manner that the summation component "A" becomes equal to the reference voltage of the comparator 20, so that the light output can be made constant.

In this case, an example of this B/A characteristic is indicated in Fig. 3(C). The wavelength of the semiconductor laser diode 4 can be set under stable condition by way of the temperature control circuit 23 in such a manner that an error signal becomes equal to zero. This error signal is defined between the B/A value and a reference voltage for a wavelength within the comparator at which the B/A value is wanted to be locked. Fig. 3(C) represents a relationship in the case that the reference voltage is equal to zero. As previously explained, while avoiding such an adverse influence caused by variations in light outputs with respect to the oscillation wavelength, the variations of the semiconductor laser diode 4 can be suppressed.

In accordance with this first embodiment mode, in the wavelength monitor unit 2, since the transmission characteristic of the wavelength filter 11 owns the temperature dependent characteristic, the temperature detecting element 14 detects the temperature, and the temperature control circuit 16 performs the temperature control operation of the temperature control element 15 in such a manner that the temperature becomes constant. In particular, in the case that the wavelength of the semiconductor laser diode 4 is required to be stabilized in high precision, the temperature control element 15 is furthermore arranged at a portion of the wavelength filter 11 having the temperature dependent characteristic, and then the temperature is detected by the temperature detecting element 14. The temperature control element 15 is driven via the temperature control circuit 16 so as to keep the temperature of this wavelength filter 11 constant, and therefore, the wavelength filter characteristic caused by the temperature variation can be stabilized.

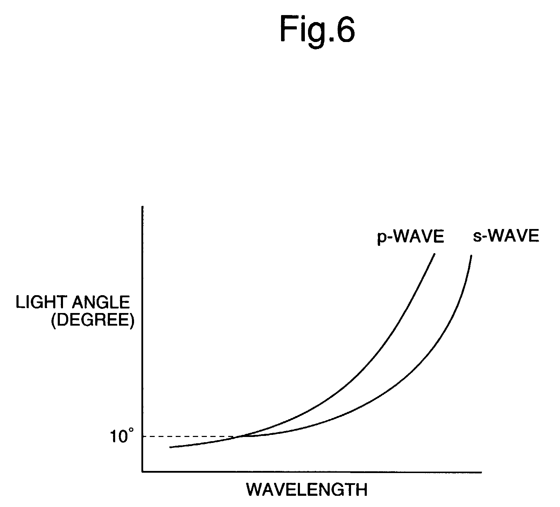

In accordance with the present invention, as previously explained, the backward projection light of the semiconductor laser diode 4 is subdivided into two beams of laser light (namely, transmission light and reflection light) by the wavelength filter 11. Since the projection light of the semiconductor laser diode 4 is propagated as a single polarized wave, this single polarized wave is featured by that this single polarized wave can be hardly influenced by the angle restriction of the wavelength filter 11. In other words, as to the angle of the wavelength filter 11 with respect to the incident light, there is no problem with respect to the incident angle dependent characteristic by the polarized wave as shown in Fig. 6, because the backward light to be entered is propagated by way of the single polarized wave. That is to say, both the position of the wavelength filter 11 and the position of the light receiving device 12 can be freely changed. As a result, the wavelength monitor portion can be made compact. In the case that a wavelength multiplexing communication is conceived, when a large number of optical transmission modules are required, such a compact wavelength monitor portion may have a great merit in view of a space.

Both the transmission characteristic and the reflection characteristic may be changed by changing the angle of the wavelength filter 11. As a consequence, such a cumbersome operation for preparing the different wavelength filters every optical transmission modules can be avoided by mounting the wavelength filter 11, while changing the setting angle of this wavelength filter 11, so that a total amount of these prepared wavelength filters can be suppressed. Furthermore, since the beam splitter 28 is no longer required, as compared with the structure of the conventional optical transmitter shown in Fig. 1, the present invention is featured by that the optical transmission module can be made compact.

OPTICAL TRANSMITTER OF SECOND EMBODIMENT

Next, an optical transmitter according to a second embodiment mode of the present invention will now be described.

As previously described, in the optical transmitter of the first embodiment mode, in order to stabilize the light output from the semiconductor laser diode 4, the light amounts detected by two light receiving devices 12 and 13 are processed by the calculating device 19, and then the processed light amounts are compared by the comparator 20. The LD drive circuit 22 is driven by this comparison result so as to control the semiconductor laser diode 4. In contrast thereto, in the optical transmitter according to this second embodiment, a light output of the semiconductor laser diode 4 is controlled to become constant based upon a comparison value obtained from a light detection value of one light receiving device 13 and a reference voltage of the comparator 20.

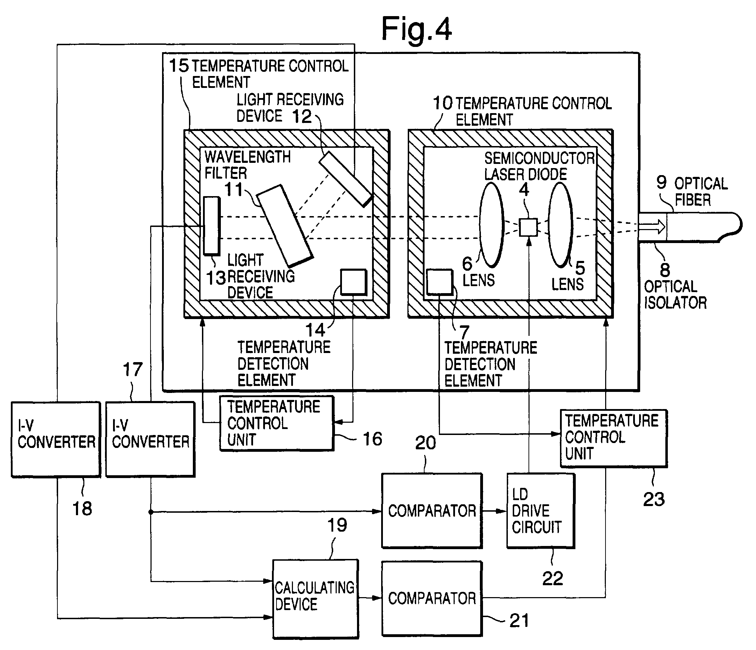

Fig. 4 is a schematic diagram for showing an arrangement of an optical transmitter according to the second embodiment mode of the present invention. It should be understood that a basic idea about an oscillation wavelength control operation of the semiconductor laser diode 4, and another basic idea about a temperature control operation of a wavelength monitor unit, employed in the optical transmitter of the second embodiment shown in Fig. 4, are similar to those of the first embodiment mode. In this second embodiment mode, backward light which has passed through a wavelength filter 11 is entered into both a light receiving device 12 and another light receiving device 13. A current detected by the light receiving device 13 is converted into a voltage by an I-V converter, and then an error signal obtained between the converted voltage and a reference voltage of a comparator 20 is fed back to an LD control circuit 22 in such a manner that this error signal becomes zero. As a result, a light output level of the semiconductor laser diode 4 is controlled. As a consequence, in accordance with this second embodiment mode, not only no calculating device 19 is used so as to stabilize the light output of the semiconductor laser diode 4, but also the signal detected by the light receiving device 13 is no longer divided, so that there is an advantage that a total number of structural components can be reduced.

WAVELENGTH MULTIPLEXING OPTICAL TRANSMISSION APPARATUS

Next, a description will now be made of a wavelength multiplexing optical transmission apparatus with employment of the optical transmitter according to the present invention.

As previously explained, in accordance with the optical transmitter of the present invention, the oscillation wavelength of the semiconductor laser diode can be set and controlled in high precision. As a result, since a plurality of optical transmitters according to the present invention are provided with an optical transmission station, the wavelengths of the signal light of each wavelength are located close to each other and are controlled in high precision, so that a wavelength multiplexing optical transmission apparatus can be arranged.

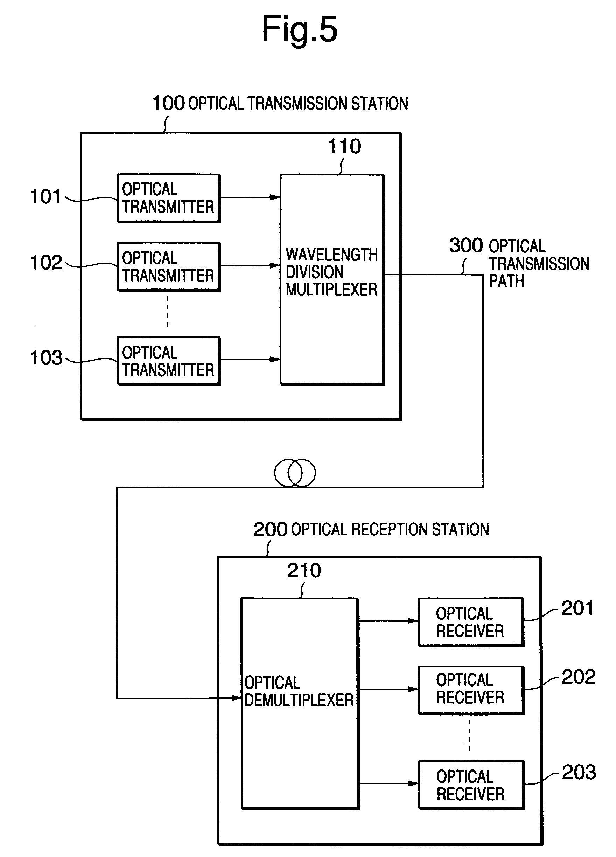

Fig. 5 is a block diagram for representing an arrangement of a wavelength multiplexing optical transmission apparatus with employment of the optical transmitter, according to the present invention. The wavelength multiplexing optical transmission apparatus of the present invention is provided with an optical transmission station 100, an optical reception station 200, and an optical transmission path 300. The optical transmission path 300 is used to connect the optical transmission station 100 to the optical reception station 200. This wavelength multiplexing optical transmission apparatus optically transmits a plurality of signal light having wavelengths different from each other between the optical transmission station 100 and the optical reception station 200. Then, the optical transmission station 100 is equipped with a plurality of optical transmitters 101, and a wavelength division multiplexer 110 for wavelength-multiplexing signal light. The optical transmitter 101 corresponds to the above-explained optical transmitter of the present invention. This optical transmitter 101 outputs such signal light from an optical waveguide (optical fiber), the wavelengths of which are different from each other. The optical reception station 200 is equipped with an optical demultiplexer 210 for demultiplexing the received wavelength-multiplexed signal light, and an optical receiver 201 for receiving each of the demultiplexed signal light.

In accordance with the optical transmitter of the present invention, since the oscillation wavelength of the semiconductor laser diode can be set in high precision and also can be controlled, even when more than 100 beams of signal light are wavelength-multiplexed while the oscillation wavelength of the semiconductor laser diode are located, for instance, in a proximate interval from 1 pm to 100 pm in a wavelength range of 1,550 nm, this optical transmitter can perform the optical transmission under stable condition.

As previously described in detail, in the optical transmitter according to the present invention, the backward projection light of the semiconductor laser diode is subdivided by 2 by the wavelength filter containing the oscillation wavelength of the semiconductor laser in the wavelength band in which the transmission wavelength band is transferred to the reflection wavelength band. Thereafter, both the transmission light and the reflection light, which are subdivided from the backward projection light, are received, respectively, so as to detect the light levels of both the transmission light and the reflection light. Either the ratio or the difference between the transmission light and the reflection light is calculated based upon these transmission light level and reflection light level. While the calculated ratio, or difference is compared with the reference value, the oscillation wavelength of the semiconductor laser diode is controlled in such a manner that the compared value can be made constant. As a result, the oscillation wavelength of the semiconductor laser is controlled without using the forward projection light and the beam splitter, so that the oscillation wavelength can be stabilized.

Also, in the optical transmitter of the present invention, the summation of the transmission light level and the reflection light level is also calculated, and also the injection current to the semiconductor laser diode is controlled. As a consequence, both the light output level and the wavelength can be controlled.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. A optical transmitter comprising:

   a semiconductor laser diode;
   an optical waveguide path into which forward projection light of said semiconductor laser diode is entered;
   a wavelength filter containing an oscillation wavelength of said semiconductor laser diode in a wavelength band where a transmission wavelength band is transferred to a reflection wavelength band and vice versa, for causing a portion of backward projection light of said semiconductor laser diode to pass therethrough to output transmission light, and for reflecting the remaining light of the backward projection light to output reflection light;
   a first light receiving device for detecting the light level of the transmission light to output a transmission light level;
   a second light receiving device for detecting the light level of the reflection light to output a reflection light level; and
   a wavelength control circuit for controlling the oscillation wavelength of said semiconductor laser diode based upon the transmission light level and the reflection light level.

2. An optical transmitter as claimed in claim 1, further comprising:

   a summation light level calculating circuit for calculating the summation of the transmission light level and the reflection light level; and
   a projection light control circuit for controlling the light level of said forward projection light based upon the summation light level.

3. An optical transmitter as claimed in claim 1 or 2, wherein
   said wavelength control circuit includes:

   a first temperature control element for controlling a peripheral temperature of said semiconductor laser diode; and
   a first temperature control circuit for controlling said first temperature control element in such a manner that the ratio of the transmission light level to the reflection light level becomes equal to a predetermined reference ratio.

4. An optical transmitter as claimed in claim 1 or 2, wherein
   said wavelength control circuit includes:

   a first temperature control element for controlling a peripheral temperature of said semiconductor laser diode; and
   a first temperature control circuit for controlling said first temperature control element in such a manner that the difference between the transmission light level and the reflection light level becomes equal to a predetermined reference value.

5. An optical transmitter as claimed in claim 1 or 2, wherein
   said wavelength control circuit includes:

   a first temperature control element for controlling a peripheral temperature of said semiconductor laser diode; and
   a first temperature control circuit for controlling said first temperature control element in such a manner that the difference between the transmission light level and the reflection light level is divided by the summation light level and then the divided difference is ruled to obtain a ruled level difference, and the ruled level difference is made equal to a predetermined reference value.

6. An optical transmitter as claimed in claim 5, further comprising an injection current control circuit for controlling an injection current to said semiconductor laser diode so as to control the projection light level.

7. An optical transmitter as claimed in claim 1 or 2, further comprising:

   a second temperature control element for controlling a peripheral temperature of said wavelength filter; and
   a second temperature control circuit for controlling said second temperature control element in such a manner that the peripheral temperature of said wavelength filter becomes constant.

**8.** An optical transmitter as claimed in claim 1 or 2, wherein

said optical waveguide path is an optical fiber.

**9.** An optical transmitter as claimed in claim 1 or 2, further comprising:

a lens arranged between said semiconductor laser diode and said wavelength filter, for converting the backward projection light into a collimated beam.

**10.** A wavelength multiplexing optical transmission apparatus comprising: an optical transmission station; an optical reception station; and an optical transmission path for connecting said optical transmission station to said optical reception station, for optically transmitting a plurality of signal light having wavelengths different from each other between said optical transmission station and said optical reception station, wherein

said optical transmission station includes:

the optical transmitter as recited in claim 1 or 2; a plurality of optical transmitters in which wavelengths of signal light outputted from said optical waveguide paths are different from each other; and a wavelength division multiplexer for wavelength multiplexing said signal light, and wherein said optical reception station includes an optical receiver for receiving the respective signal light.

# Fig.1 PRIOR ART

31 LIGHT RECEIVING DEVICE

29 WAVELENGTH FILTER

BEAM SPLITTER 28

27 ELECTRONIC COOLING ELEMENT

SEMICONDUCTOR LASER DIODE 26

24 OPTICAL FIBER

25 LENS

30 WAVELENGTH FILTER

32 LIGHT RECEIVING DEVICE

36 TEMPERATURE CONTROL CIRCUIT

33 CONTROL CIRCUIT

35 LD DRIVE CIRCUIT

34 CONTROL CIRCUIT

EP 1 063 794 A2

# Fig.2

# Fig.3

BLOCK (REFLECTION) BAND

TRANSMISSION BAND

TRANSITION RANGE

(A)

TRANSMITTANCE

WAVELENGTH

(B)

RECEIVED LIGHT AMOUNT

LIGHT RECEIVING DEVICE

LIGHT RECEIVING DEVICE 12

LIGHT RECEIVING DEVICE 13

λL WAVELENGTH

(C)

CALCULATING DEVICE OUTPUT B/A

λL

WAVELENGTH

# Fig.4

15 TEMPERATURE CONTROL ELEMENT

LIGHT RECEIVING DEVICE 12

10 TEMPERATURE CONTROL ELEMENT

WAVELENGTH FILTER 11

SEMICONDUCTOR LASER DIODE 4

9 OPTICAL FIBER

LIGHT RECEIVING DEVICE 13

6 LENS

5 LENS

8 OPTICAL ISOLATOR

14 TEMPERATURE DETECTION ELEMENT

7 TEMPERATURE DETECTION ELEMENT

I-V CONVERTER

I-V CONVERTER 17

TEMPERATURE CONTROL UNIT 16

TEMPERATURE CONTROL UNIT 23

18

COMPARATOR 20

LD DRIVE CIRCUIT 22

CALCULATING DEVICE 19

COMPARATOR 21

# Fig.5

100 OPTICAL TRANSMISSION STATION

110

101 — OPTICAL TRANSMITTER

102 — OPTICAL TRANSMITTER

103 — OPTICAL TRANSMITTER

WAVELENGTH DIVISION MULTIPLEXER

300 OPTICAL TRANSMISSION PATH

200 OPTICAL RECEPTION STATION

210

OPTICAL DEMULTIPLEXER

OPTICAL RECEIVER — 201

OPTICAL RECEIVER — 202

OPTICAL RECEIVER — 203

# Fig.6